# EUROPEAN PATENT SPECIFICATION

(11) **EP 3 038 189 B1**
(45) Date of publication and mention of the grant of the patent: **02.05.2018**
(21) Application number: 13891854.5
(22) Date of filing: 22.08.2013
(51) Int. Cl.: H01M 2/06, H01M 2/30, H01M 2/22

(54) **SECONDARY CELL**
SEKUNDÄRBATTERIE
PILE RECHARGEABLE

(43) Date of publication of application: 29.06.2016
(73) Proprietor: Hitachi Automotive Systems, Ltd., Hitachinaka-shi, Ibaraki 312-8503 (JP)
(72) Inventor: KAJIWARA Kouichi, Hitachinaka-shi Ibaraki 312-8505 (JP); IKEDA Kohtaro, Hitachinaka-shi Ibaraki 312-8505 (JP); EGAWA Hiroaki, Hitachinaka-shi Ibaraki 312-8505 (JP)
(74) Representative: MERH-IP Matias Erny Reichl Hoffmann Patentanwälte PartG mbB
(86) International application number: PCT/JP2013/072347
(87) International publication number: WO 2015/025388

(56) References cited:
- WO-A1-2009/142022
- WO-A1-2010/131298
- WO-A1-2011/161984
- JP-A- 2004 014 173
- JP-A- 2009 087 736
- JP-A- 2012 054 203
- US-A1- 2008 241 679
- US-A1- 2012 055 909
- US-A1- 2012 270 085

## Description

### Technical Field

The present invention relates to a secondary battery used for on-board application or the like, for example. A generic secondary battery according to the preamble of claim 1 is for instance known from US 2008/0241679 A1.

### Background Art

Recently, as a power source for an electric vehicle, a hybrid electric vehicle and the like, development of a secondary battery such as a lithium-ion secondary battery with high energy density has been progressed.

In a square-shaped lithium-ion secondary battery, an electrode group obtained by laminating positive/negative electrodes in which an active substance is applied on a metal foil and a separator which is an insulator and by winding them in a flat state is electrically connected to positive/negative external terminals provided on a battery lid through positive/negative collector plate is accommodated in a battery can from an upper opening. Moreover, the battery lid is sealed/welded to the upper opening of the battery can, an electrolyte is poured through a liquid pouring port provided in the battery lid, and a liquid pouring plug is sealed/welded to the liquid pouring port so as to make a secondary battery.

In a sealed battery described in PTL 1 below, a cylindrical caulking member provided on the external terminal is caulked in a diameter-expanding direction, and a flange portion of the external terminal, an opening mouth sealing plate, and an electric collector are mechanically fixed. Moreover, a thin portion formed on a tip end portion of the cylindrical caulking member and thinned more than the other portion is in close contact with the electric collector, and moreover, the thinned portion which is thinned and the electric collector are welded by a high energy ray.

The sealed battery in PTL 1 is constituted such that, by forming the thin portion which is thinned on the tip end portion of the caulking member, the electric collector and the external terminal can be easily welded by the high energy ray such as a laser. However, in PTL 1, since the tip end portion of the caulking member for caulking/fixing a collector plate, the external terminal and the like is thinned over the entire periphery, there is a concern that mechanical strength of caulking fixation is lowered.

On the other hand, in the secondary battery described in PTL 2 below, a caulking portion whose diameter is expanded on an outer side of a lid is formed on a positive electrode external terminal and a negative electrode external terminal, a thin flat portion capable of laser-spot welding is locally formed on the caulking portion, and the thin flat portion is laser-spot welded. As described above, by locally forming the thin flat portion on the caulking portion, drop of the mechanical strength of caulking/fixation is prevented, and a favorable welding quality and high caulking strength can be obtained.

### Citation List

Further secondary batteries, in which external terminals are connected via a caulking operation and welding to a collector plate of the electrodes, are described in US 2012/270085 A1 and US 2012/055909 A1.

### Patent Literatures

PTL 1: JP 2009-87693 A
PTL 2: JP 2012-28246 A

### Summary of Invention

### Technical Problem

In the secondary battery of PTL 2, favorable welding quality and high caulking strength can be obtained by locally forming a thin flat portion in a caulking portion, but it is necessary to thin the thin flat portion to a thickness suitable for laser-spot welding and to melt an entire thickness of the thin flat portion. Therefore, when the thin flat portion is formed, a relatively high pressure needs to be applied to the caulking portion, but with higher capacity of and smaller size and weight of the secondary battery, strength of peripheral members of the caulking portion tends to be lower, and an influence on the peripheral members is concerned.

The present invention was made in view of the aforementioned problem and has an object to provide a secondary battery which can obtain favorable welding quality in a caulking portion while a pressure applied to the caulking portion is reduced.

### Solution to Problem

In order to solve the aforementioned problem, the present invention proposes a secondary battery having the features defined in claim 1. Further preferred embodiments are defined in the dependent claims.

### Advantageous Effects of Invention

According to the secondary battery of the present invention, since the caulking portion has the pressure-contact portion forming a contact surface by pressurization between the caulking portion and at least either one of the collector plate and the external terminal, and by welding the contact portion between the outer peripheral side wall of the caulking portion and at least one of the collector plate and the external terminal along the pressure-contact portion, a favorable welding quality in the caulking portion can be obtained while the pressure applied to the caulking portion is reduced more than the prior-art.

Problems, constitution, and effects other than the above will be made apparent from the description of the embodiments below.

### Brief Description of Drawings

[FIG. 1] FIG. 1 is an appearance perspective view of a square-shaped secondary battery according to a first embodiment of the present invention.
[FIG. 2] FIG. 2 is an exploded perspective view of the square-shaped secondary battery illustrated in FIG. 1.
[FIG. 3] FIG. 3 is an exploded perspective view of an electrode group illustrated in FIG. 2.
[FIG. 4] FIG. 4 is an exploded perspective view of vicinities of an external terminal and a collector plate illustrated in FIG. 2.
[FIG. 5] FIG. 5 is a perspective view after assembly of the external terminal and the collector plate illustrated in FIG. 4.
[FIG. 6] FIG. 6 is a sectional view along a VI-VI line in FIG. 5.
[FIG. 7] FIG. 7 is a sectional view before caulking fixation of the external terminal and the collector plate illustrated in FIG. 6.
[FIG. 8] FIG. 8 is a sectional view illustrating a first caulking process of the external terminal and the collector plate illustrated in FIG. 6.
[FIG. 9] FIG. 9 is a sectional view illustrating a second caulking process of the external terminal and the collector plate illustrated in FIG. 6.
[FIG. 10] FIG. 10 is a sectional view illustrating a third caulking process of the external terminal and the collector plate illustrated in FIG. 6.
[FIG. 11] FIG. 11 is a perspective view corresponding to FIG. 5 of the square-shaped secondary battery according to a second embodiment of the present invention.
[FIG. 12] FIG. 12 is a sectional view along an XII-XII line in FIG. 11.
[FIG. 13] FIG. 13 is an enlarged plan view of a caulking portion illustrated in FIG. 11.
[FIG. 14] FIG. 14 is a sectional view illustrating a third caulking process of the external terminal and the collector plate illustrated in FIG. 11.
[FIG. 15] FIG. 15 is an exploded perspective view corresponding to FIG. 4 of a secondary battery according to a third embodiment of the present invention.
[FIG. 16] FIG. 16 is a front enlarged view after assembly of the external terminal and the collector plate illustrated in FIG. 15.

### Description of Embodiments

Embodiments of the secondary battery of the present invention will be described below in details by referring to the attached drawings.

### [First embodiment]

### (Entire constitution)

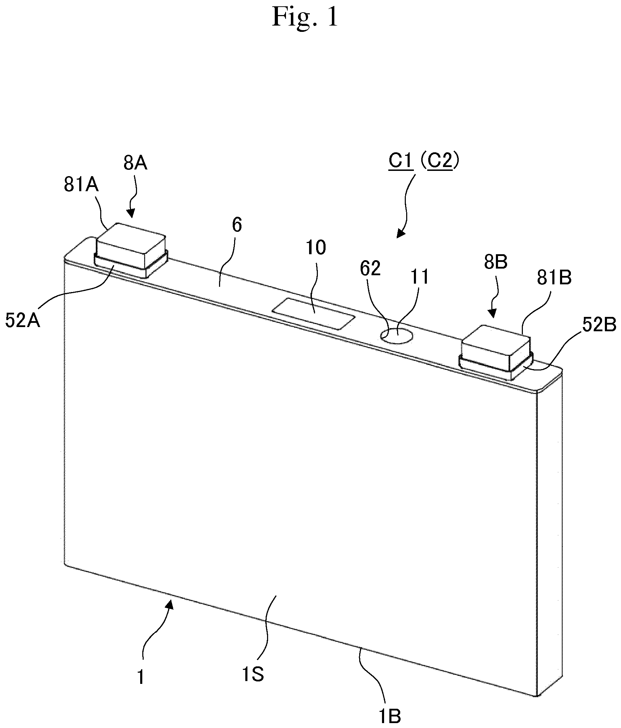

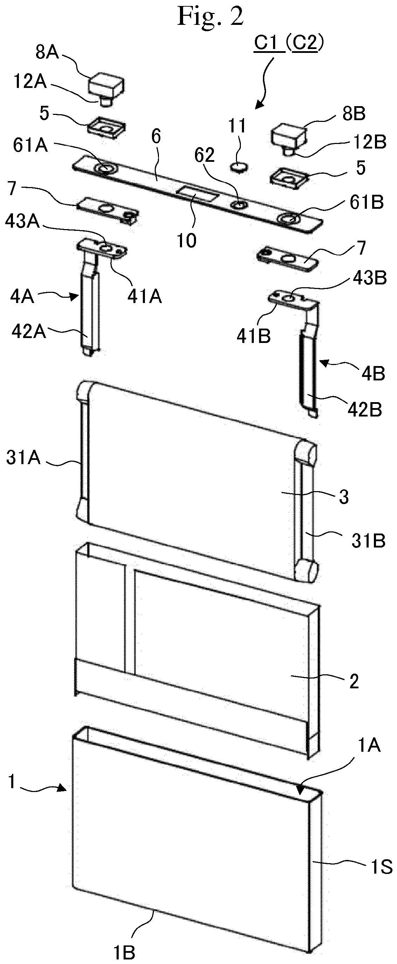

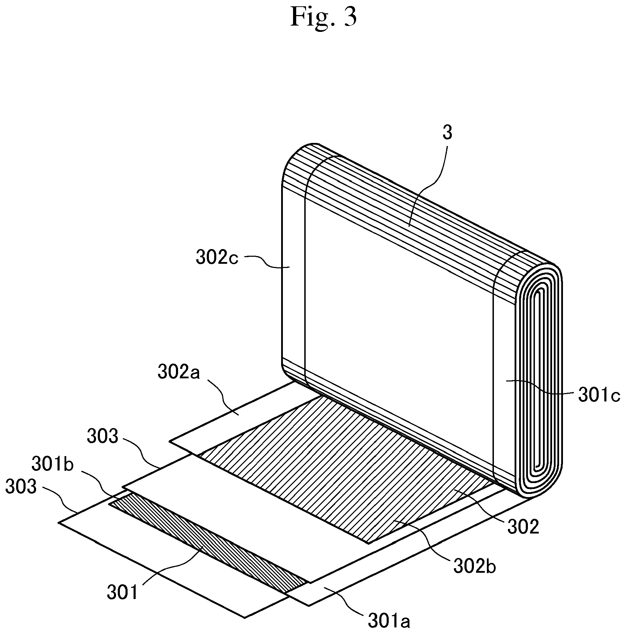

FIG. 1 is a perspective view of a secondary battery according to a first embodiment of the present invention. FIG. 2 is an exploded perspective view of the secondary battery illustrated in FIG. 1. FIG. 3 is an exploded perspective view of an electrode group constituting a part of the secondary battery illustrated in FIG. 2.

A secondary battery C1 of the present embodiment is a square-shaped lithium-ion secondary battery, for example, and has a battery can 1 and a battery lid 6 constituting a cuboid-shaped battery container. The battery can 1 is a rectangular and flat box-shaped container with an upper side open, having a side peripheral wall (side surface) 1S, a bottom wall (bottom surface) 1B, and an upper opening 1A. Inside the battery can 1, an electrode group 3 as a power generation body is accommodated through an insulating sheet 2. The battery lid 6 is joined to the upper opening 1A of the battery can 1 over the entire periphery by laser welding and seals the battery can 1. As a material for the battery can 1 and the battery lid 6, aluminum or an aluminum alloy is used, for example. The shape of the battery container of the secondary battery C1 is not limited to the square but may be cylindrical or other shapes.

On the battery lid 6, a positive electrode external terminal 8A and a negative electrode external terminal 8B, a liquid pouring port 62 and a liquid pouring plug 11, and a gas discharge valve 10 are provided. As a material for the positive electrode external terminal 8A, aluminum or an aluminum alloy is used, for example, and as a material for the negative electrode external terminal 8B, copper or a copper alloy is used, for example. The liquid pouring port 62 is used for pouring an electrolyte into the battery can 1, and after the electrolyte has been poured into the battery can 1, it is welded/sealed by the liquid pouring plug 11. The gas discharge valve 10 is opened when a pressure in the battery container exceeds a predetermined value, and the pressure is reduced by discharging the gas in the battery container so as to ensure safety of the secondary battery C1.

As illustrated in FIG. 3, the electrode group 3 is a wound electrode group in which a positive electrode body 301 and a negative electrode body 302 and a separator 303 interposed between them are wound in a flat shape. The positive electrode body 301 is obtained by applying a positive electrode mixture 301b on both surfaces of a positive electrode foil 301a and has a positive electrode foil exposure portion 301c where the positive electrode mixture 301b is not applied on one end side in a winding axis direction of the electrode group 3. The negative electrode body 302 is obtained by applying a negative electrode mixture 302b on both surfaces of a negative electrode foil 302a and has a negative electrode foil exposure portion 302c where the negative electrode mixture 302b is not applied on the other end side in the winding axis direction of the electrode group 3. The positive electrode foil exposure portion 301c and the negative electrode foil exposure portion 302c are wound so as to be located opposite to each other in the winding axis direction.

The electrode group 3 is wound having the flat shape and has a pair of flat surface portions which are flat and faced with a pair of wide surfaces of the side walls 1S of the battery can 1 and a pair of curved portions having semicircular sections formed on both sides of the pair of flat surface portions. The positive electrode foil exposure portions 301c of the electrode group 3 are bundled on the flat surface portions, and a flat-plate shaped positive electrode connection portion 31A is formed as illustrated in FIG. 2. Similarly, the negative electrode foil exposure portions 302c of the electrode group 3 are also bundled on the flat surface portions, and a flat-plate shaped negative electrode connection portion 31B is formed. The positive electrode connection portion 31A and the negative electrode connection portion 31B are bonded by ultrasonic welding, for example, in a state overlapped on a positive electrode collector plate 4A and a negative electrode collector plate 4B and electrically connected to the positive electrode collector plate 4A and the negative electrode collector plate 4B. As a material for the positive electrode collector plate 4A, aluminum or an aluminum alloy is used, for example, and as a material for the negative electrode collector plate 4B, copper or a copper alloy is used, for example.

The positive electrode collector plate 4A and the negative electrode collector plate 4B have basically symmetric constitution, though their materials are different from each other. Moreover, the positive electrode external terminal 8A and the negative electrode external terminal 8B also have the basically symmetric constitution, though their materials are different from each other. The same applies to the members around them. Thus, in the following description, the constitution of the positive electrode side will be described, while the description for the constitution of the negative electrode side will be omitted.

As illustrated in FIG. 2, the collector plate 4A is provided on an inner side of the battery lid 6 and has a rectangular plate-shaped base portion 41A and a connection portion 42A bent on a side end of the base portion 41A and extending in one direction. In the collector plate 4A, by arranging the base portion 41A so as to face a lower surface of the battery lid 6, the connection portion 42A is extended toward the bottom wall 1B of the battery can 1 along the wide surface of the side wall 1S of the battery can 1 and is overlapped facing the connection portion 31A of the electrode group 3. The collector plate 4A is electrically connected to the electrode group 3 by joining of the connection portion 42A to the connection portion 31A of the electrode group 3 by ultrasonic welding, for example.

As illustrated in FIGS. 1 and 2, the external terminal 8A is provided on an outer side of the battery lid 6 and has a cuboid block-shaped welding joint portion 81A protruding upward from the upper surface of the battery lid 6. A lower surface of the welding joint portion 81A is faced with the upper surface of the battery lid 6, and the upper surface of the welding joint portion 81A is formed so as to be in parallel with the battery lid 6 at a predetermined height position from the upper surface of the battery lid 6. On the lower surface of the welding joint portion 81A, a connection terminal 12A is provided integrally with the welding joint portion 81A. That is, the connection terminal 12A and the external terminal 8A are integrally provided. On an upper surface of the welding joint portion 81A, a bus bar or the like, not shown is welded/joined.

### (Constitution around caulking portion)

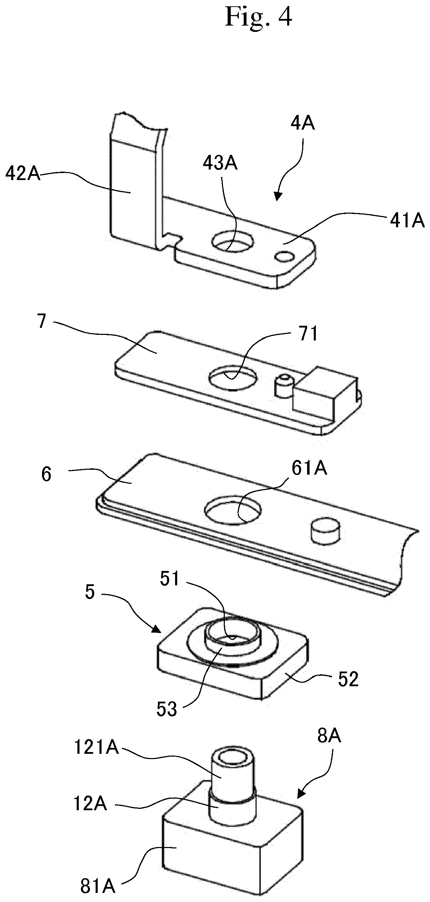

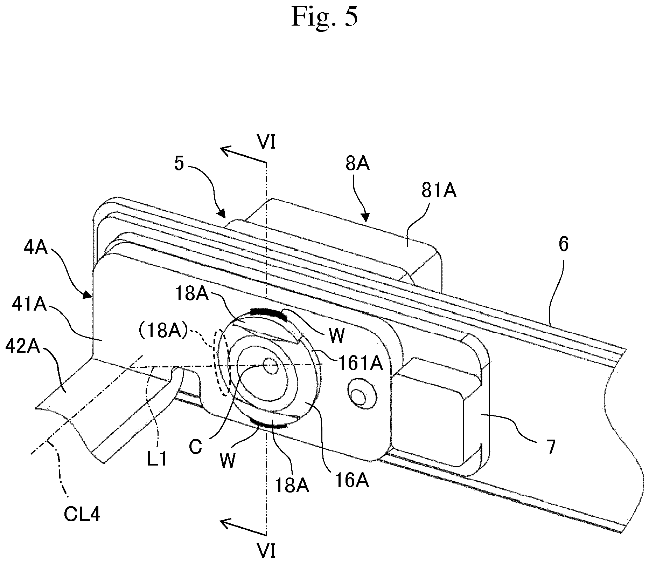

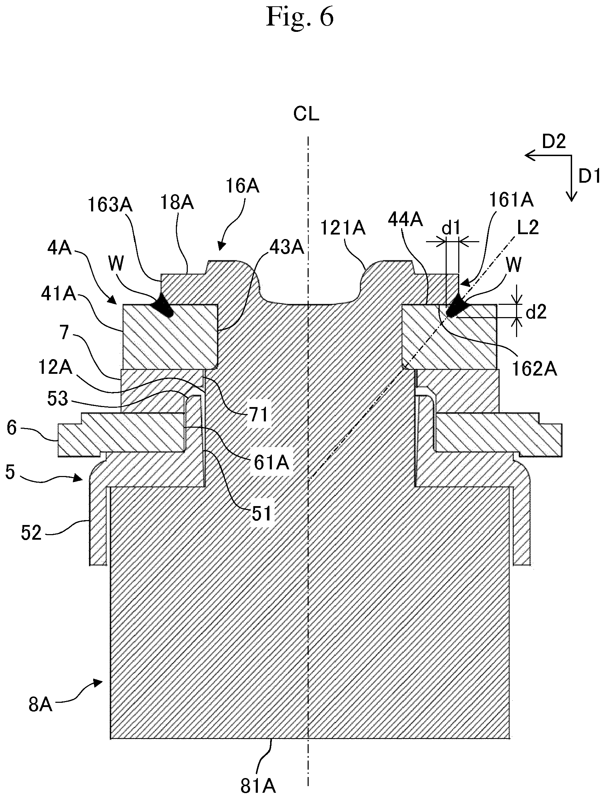

Subsequently, a caulking portion and a pressure-contact portion which are feature portions of the secondary battery C1 of the present embodiment and the constitution around them will be described. FIG. 4 is an enlarged exploded perspective view illustrating constitution between the positive electrode external terminal 8A and the positive electrode collector plate 4A before caulking fixation by vertically inverting FIG. 2. FIG. 5 is a perspective view illustrating a state after each constitution illustrated in FIG. 4 is caulked/fixed. FIG. 6 is a sectional view along the VI-VI line in FIG. 5. Though not shown, the constitution around the negative electrode external terminal 8B and the negative electrode collector plate 4B is also similar to the constitution illustrated in FIGS. 4 to 6.

As illustrated in FIG. 4, the connection terminal 12A is formed having a columnar shape protruding from the lower surface (surface facing upward in the figure) of the welding joint portion 81A of the external terminal 8A. The connection terminal 12A is electrically connected to the external terminal 8A by having the same material as that of the welding joint portion 81A and being integrally provided with the welding joint portion 81A. On a tip end of the connection terminal 12A, a cylindrical portion 121A having a cylindrical shape and opened on the tip end side is provided. An outer diameter of the base portion of the connection terminal 12A is larger than an outer diameter of the cylindrical portion 121A on the tip end. The external terminal 8A and the connection terminal 12A are electrically insulated from the battery lid 6 with a gasket 5 interposed between them, and the battery lid 6 and the collector plate 4A are electrically insulated from each other with an insulating plate 7 interposed between them. The connection terminal 12A may have a hollow cylindrical shape as a whole or it may have a solid columnar shape as a whole as long as the tip end thereof can be caulked. The shape of the connection terminal 12A is not limited to the columnar or cylindrical shape but may be a square or other polygonal columnar or cylindrical shapes, for example.

In the gasket 5, the battery lid 6, and the insulating plate 7, through holes 51, 61A and 71 through each of which the connection terminal 12A is inserted are provided, respectively, and in the base portion 41A of the collector plate 4A, a through hole 43A through which only the cylindrical portion 121A of the connection terminal 12A is inserted is provided. As illustrated in FIG. 6, inner diameters of the through holes 51, 61A, and 71 of the gasket 5, the battery lid 6, and the insulating plate 7 are larger than the outer diameter of the base portion of the connection terminal 12A. The inner diameter of the through hole 43A of the collector plate 4A is smaller than the outer diameter of the base portion of the connection terminal 12A and larger than the outer diameter of the cylindrical portion 121A.

The gasket 5 includes a side peripheral wall 52 on an upper surface, covering a lower end portion of a side peripheral surface of the welding joint portion 81A of the external terminal 8A over the entire periphery and includes a rim portion 53 on a lower surface, interposed between an inner peripheral wall of the through hole 61A of the battery lid 6 and an outer peripheral surface of the connection terminal 12A. The side peripheral wall 52 prevents short-circuit between the side peripheral surface of the welding joint portion 81A and the battery lid 6. The rim portion 53 insulates the inner peripheral wall of the through hole 61A of the battery lid 6 from the outer peripheral surface of the connection terminal 12A.

As illustrated in FIG. 6, the connection terminal 12A includes a caulking portion 16A provided on a lower surface of the base portion 41A of the collector plate 4A. The caulking portion 16A is provided by "caulking" which causes the cylindrical portion 121A to be deformed in a disc state, after the connection terminal 12A illustrated in FIG. 4 is sequentially inserted through the through hole 51 of the gasket 5, the through hole 61A of the battery lid 6, and the through hole 71 of the insulating plate 7 and the cylindrical portion 121A on the tip end is inserted through the through hole 43A of the collector plate 4A. That is, the collector plate 4A and the external terminal 8A are caulked/fixed to the battery lid 6 by the connection terminal 12A. As illustrated in FIG. 5, an outer contour of the caulking portion 16A on a plan view is substantially circular, and the caulking portion 16A has an outer peripheral side wall 161A on an outer peripheral side portion. The outer peripheral side wall 161A is formed over the entire periphery of the caulking portion 16A. The caulking portion 16A is accommodated inside the battery container together with the collector plate 4.

As illustrated in FIG. 6, the caulking portion 16 includes a pressure-contact portion 18A on an outer peripheral end portion. The pressure-contact portion 18A forms contact surfaces 162A and 44A by pressurization between the pressure-contact portion 18A and the collector plate 4A. That is, the pressure-contact portion 18A is provided by pressurizing a part of the caulking portion 16A so as to generate the contact surfaces 162A and 44A between the caulking portion 16A and the collector plate 4A. The pressure-contact portion 18A is a portion plastically deformed by pressurization of a part of the caulking portion 16A and is a region where a bottom surface of the caulking portion 16A and a surface of the base portion 41A of the collector plate 4A are in close contact with each other, and the collector plate 4A and the caulking portion 16A are in contact with each other through their contact surfaces 44A and 162A.

That is, in the pressure-contact portion 18A, the caulking portion 16A and the collector plate 4A are planarly brought into contact with each other by a predetermined pressing force. By means of these contact surfaces 44A and 162A, the connection terminal 12A and the collector plate 4A are electrically connected, and the collector plate 4A is electrically connected to the external terminal 8A. On a portion where the pressure-contact portion 18A of the caulking portion 16A is not formed, the bottom surface of the caulking portion 16A facing the collector plate 4A is not necessarily in contact with the collector plate 4A but a slight gap is formed between the caulking portion 16A and the collector plate 4A in some cases. Reasons for that will be described in detail in a method for forming the caulking portion 16A and the pressure-contact portion 18A which will be described later.

The pressure-contact portion 18A is a stepped portion provided in a stepped state on the outer peripheral end portion of the caulking portion 16A so as to reach the outer peripheral side wall 161A of the caulking portion 16A. A planar shape of the caulking portion 16A is circular, and the outer peripheral side wall 161A of the caulking portion 16A is formed having an arc shape on a plan view. On the other hand, the pressure-contact portion 18A is formed linearly along the outer peripheral side wall 161A on a plan view. That is, the pressure-contact portion 18A is formed by pressurization of the outer peripheral end portion of the caulking portion 16A having an arc shape on a plan view by a linear or rectangular pressing member on a plan view and formed having a stepped shape on the outer peripheral end portion of the caulking portion 16A. The pressure-contact portion 18A may be formed having an arc shape or a fan shape along the outer peripheral side wall 161A of the caulking portion 16A.

The pressure-contact portion 18A has its longitudinal direction formed along a longitudinal direction of the battery lid 6, that is, along a wide surface of the side wall 1S of the battery can 1, and two spots along a width direction of the battery lid 6, that is, along a narrow surface of the side wall IS of the battery can 1 are formed symmetrically to a center C of the caulking portion 16A. A position, arrangement, a size and the like of the pressure-contact portion 18A can be changed as appropriate by considering a size of the caulking portion 16A, a shape of the collector plate 4A and the like, but preferably, the pressure-contact portion 18A is evenly arranged in a circumferential direction of the caulking portion 16A.

The pressure-contact portion 18A is preferably formed on a straight line connecting the outer peripheral side wall 161A of the caulking portion 16A and the connection portion 42A of the collector plate 4A to each other with a shortest distance or its vicinity. For example, as illustrated in FIG. 5, the pressure-contact portion 18A can be formed in a region surrounded by a broken line so as to cross a straight line L1 connecting the center C of the caulking portion 16A and a center line CL4 of the collector plate 4A.

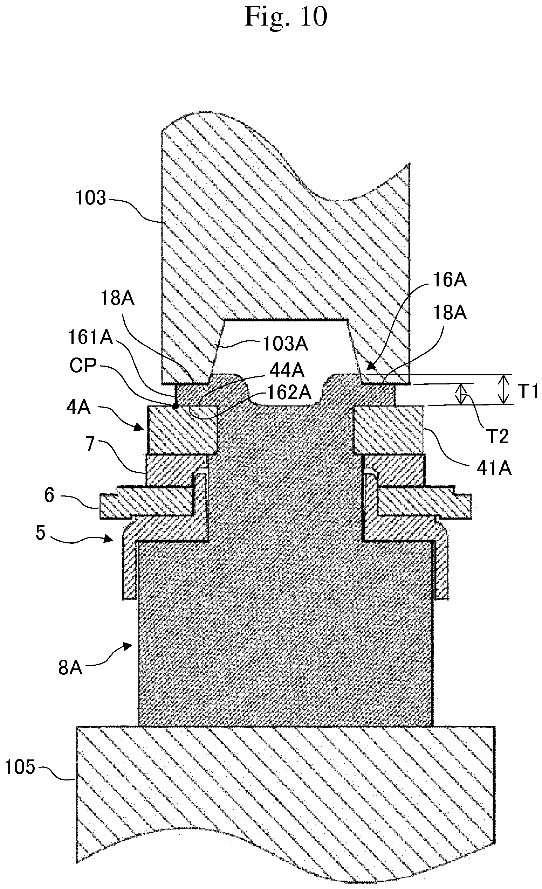

In the secondary battery C1 of the present embodiment, a contact portion CP (see FIG. 10) between the lower surface of the base portion 41A of the collector plate 4A and the outer peripheral side wall 161A of the caulking portion 16A are welded along the pressure-contact portion 18A so as to form a welded portion W. The welded portion W may be formed over the entire periphery of the caulking portion A by welding a lower end of the outer peripheral side wall 161A and the base portion 41A of the collector plate 4A over the entire periphery of the caulking portion 16A. Here, the contact portion CP is a portion where a surface including the contact surface 44A of the collector plate 4A and the lower end of the outer peripheral side wall 161A of the caulking portion 16A are made to abut against each other and in contact.

In the contact portion CP, the welded portion W is formed by high energy beam welding for welding by irradiating the caulking portion 16A and the collector plate 4A with high energy beams such as laser beams and electron beams so as to join the caulking portion 16A and the collector plate 4A. As described above, since the welded portion W is formed by welding the caulking portion 16A and the collector plate 4A, the caulking portion 16A and the collector plate 4A are fixed and the caulking portion 16A and the collector plate 4A are electrically connected to each other not only by the contact surfaces 162A and 44A but also by the welded portion W. A forming method of the welded portion W will be described later in detail.

As illustrated in FIG. 6, the welded portion W extends along a straight line L2 crossing both the outer peripheral side wall 161A of the caulking portion 16A and the contact surface 44A of the collector plate 4A. Therefore, a depth of welding based on the outer peripheral side wall 161A, that is, a depth d1 of the welded portion W gradually increases in a direction D1 from the caulking portion 16A toward the battery lid 6 along the outer peripheral side wall 161A. Similarly, a depth of welding based on the contact surface 44A of the collector plate 4A, that is, the depth d2 of the welded portion W gradually increases in a direction D2 from the outer peripheral side wall 161A of the caulking portion 16A toward the center line CL along the contact surface 44A.

In the outer peripheral side wall 161A of the caulking portion 16A along the pressure-contact portion 18A, a portion close to the contact surfaces 44A and 162A adjacent to the contact surfaces 44A and 162A, that is, an end portion of the outer peripheral side wall 161A on the contact portion CP side is melted and solidified in welding and constitutes the welded portion W. Moreover, the outer peripheral side wall 161A of the caulking portion 16A along the pressure-contact portion 18A has a non-melted portion 163A not melted in welding in a portion away from the contact surfaces 44A and 162A, that is, a portion away from the contact portion CP. That is, on the outer peripheral side wall 161A of the caulking portion 16A, the welded portion W is formed while leaving the non-melted portion 163A on an end portion on a side opposite to the contact surface 162A or the contact portion CP.

With respect to the secondary battery C1 of the present embodiment having the constitution described above, in the case of the prior-art secondary battery, as in PTL 1 and PTL 2 described above, for example, substantially the whole region on the upper surface of the thin portion obtained by thinning the caulking portion is irradiated with high energy beams such as laser along a thickness direction of the thin portion so as to melt the thin portion over the entire thickness, and the thin portion and the collector plate are welded. Thus, the thickness of the thin portion needs to be sufficiently thinned to such a degree that the entire thickness can be melted. The prior-art secondary battery needs to be thinned to a thickness of the thin portion at approximately 0.1 to 0.2 mm when the thickness of the caulking portion is approximately 1 mm, for example. That is, in order to form the thin portion, the caulking portion needs to be thinned to the thinness of approximately 10 to 20%, for example.

Therefore, in the prior-art secondary battery, a relatively high pressure needs to be applied to the caulking portion when the thin portion is formed on the caulking portion. However, with higher capacity and smaller size and weight of the secondary battery, members around the caulking portion are thinned, and mechanical strength tends to be lowered. Therefore, if the relatively high pressure as described above is applied to the caulking portion, there is a concern that a bad influence occurs on the peripheral members such as deformation of the members around the caulking portion.

On the other hand, in the secondary battery C1 of the present embodiment, the caulking portion 16A includes the pressure-contact portion 18A forming the contact surfaces 162A and 44A by pressurization between the pressure-contact portion 18A and the collector plate 4A. That is, in the present embodiment, the pressure-contact portion 18A is pressurized not for thinning for welding of the caulking portion 16A but for formation of the contact surfaces 162A and 44A between the pressure-contact portion 18A and the collector plate 4A. The contact portion CP between the collector plate 4A and the outer peripheral side wall 161A of the caulking portion 16A is welded along the pressure-contact portion 18. In short, the pressure-contact portion 18A does not have to be thinned considering melting of the entire thickness, unlike the thin portion of the prior-art secondary battery.

Therefore, the pressure-contact portion 18A can form the caulking portion 16A by pressurization with a pressure drastically smaller than a pressure when the prior-part thin portion is formed, that is, a pressure of such a degree that can generate the contact surfaces 162A and 44A between the caulking portion 16A and the collector plate 4A. As a result, after the caulking portion 16A is formed, a load and pressure acting on the members around the caulking portion 16A can be drastically reduced as compared with the prior-art. Thus, according to the secondary battery C1 of the present embodiment, a bad influence such as deformation, for example, to the members around the caulking portion 16A such as the gasket 5, the battery lid 6, the insulating plate 7 and the collector plate 4A can be prevented.

For example, if the thickness of the caulking portion 16A is approximately 1 mm, it is only necessary to pressurize a part of the caulking portion 16A so that the thickness of the pressure-contact portion 18A becomes approximately 0.6 to 0.8 mm. That is, the thickness of the pressure-contact portion 18A may be 60% or more and 80% or less of the thickness of the caulking portion 16A, for example. Moreover, the thickness of the pressure-contact portion 18A may be 80% or more of the thickness of the caulking portion 16A as long as the contact surfaces 162A and 44A can be formed. As described above, since the thickness of the pressure-contact portion 18A can be made thicker than the prior-art thin portion, caulking strength higher than the prior-art can be obtained in the caulking portion 16A.

Moreover, since the pressure-contact portion 18A is formed after the caulking portion 16A is formed, the contact surfaces 162A and 44A are generated between the caulking portion 16A and the collector plate 4A, and a space or a gap is not formed any more between the caulking portion 16A and the collector plate 4A on the pressure-contact portion 18A and its periphery. That is, in the present embodiment, attention is paid to the fact that, even after the caulking portion 16A is formed, a slight space or a gap is formed between the caulking portion 16A and the collector plate 4A, and there is a concern that the caulking portion 16A and the collector plate 4A are not in full contact, and in order to solve nonconformity caused by the space or the gap, the pressure-contact portion 18A is formed.

Since the contact surfaces 162A and 44A are formed in the pressure-contact portion 18A, and the space or the gap is not formed between the caulking portion 16A and the collector plate 4A any longer in the pressure-contact portion 18A and its periphery, a defect of the welded portion W when the welded portion W is formed on the contact portion CP along the pressure-contact portion 18A can be prevented. As described above, if a slight space or a gap is formed between the caulking portion 16A and the collector plate 4A, air in the space or the gap is expanded by heat when the welded portion W is formed and is discharged from the space or the gap. There is a concern that a defect occurs in the welded portion W by the expansion and discharge of the air. However, by forming the pressure-contact portion 18A in the caulking portion 16A, by forming the contact surfaces 162A and 44A between the caulking portion 16A and the collector plate 4A in the pressure-contact portion 18A and its periphery, and by forming the welded portion W on the contact portion CP along the pressure-contact portion 18A, the nonconformity caused by the expansion of air as described above is prevented, and the defect of the welded portion W is prevented. Therefore, a quality of welding of the welded portion W can be improved.

Moreover, the depth d1 of the welded portion W based on the outer peripheral side wall 161A gradually increases in the direction D1 from the caulking portion 16A toward the battery lid 6 along the outer peripheral side wall 161A. As a result, while joining strength by welding between the caulking portion 16A and the collector plate 4A is maintained, a metal amount to be melted when the welded portion W is formed can be reduced as compared with the case of uniform welding depth and the welded portion W can be formed efficiently.

Moreover, the outer peripheral side wall 161A of the caulking portion 16A along the pressure-contact portion 18A has the non-melted portion 163A not melted in welding in the portion away from the contact portion CP on which the welded portion W is formed. Therefore, even if the thickness of the caulking portion 16A or the pressure-contact portion 18A is increased, by increasing the non-melted portion 163A of the outer peripheral side wall 161A along with that, welding between the caulking portion 16A and the collector plate 4A by high energy beams such as laser welding is made possible regardless of the thickness of the caulking portion 16A or the pressure-contact portion 18A. Moreover, melting on the surface opposite to the contact surface 162A of the pressure-contact portion 18A in welding is prevented, and the metal amount to be melted in welding can be reduced as compared with the case of forming the welded portion W on the entire outer peripheral side wall 161A, and the caulking portion 16A and the collector plate 4A can be welded efficiently.

Moreover, the pressure-contact portion 18A is a stepped portion provided on the outer peripheral end portion of the caulking portion 16A so as to reach the outer peripheral side wall 161A of the caulking portion 16A. As a result, the contact surfaces 44A and 162A can be generated adjacent to the welded portion W formed on the outer peripheral side wall 161A of the caulking portion 16A, and a defect of the welded portion W caused by expansion of air can be prevented more effectively in welding of the caulking portion 16A and the collector plate 4A.

Moreover, the outer peripheral side wall 161A of the caulking portion 16A is formed having an arc shape on a plan view, and the pressure-contact portion 18A is formed linearly along the outer peripheral side wall 161A on a plan view. Thus, over the entire region of the pressure-contact portion 18A including immediately below the outer peripheral side wall 161A having the arc shape on a plan view of the caulking portion 16A which is an outer edge of the pressure-contact portion 18A, the contact surfaces 44A and 162A can be generated reliably.

Moreover, the pressure-contact portion 18A has its longitudinal direction formed along the longitudinal direction of the battery lid 6. By forming the pressure-contact portion 18A at this position, formation of the welded portion W is facilitated in relation with the peripheral members. Moreover, two spots are formed symmetrically to the center of the caulking portion 16A along the width direction of the battery lid 6. As described above, by arranging the pressure-contact portion 18A evenly in the circumferential direction of the caulking portion 16A, the pressure when each of the pressure-contact portions 18A is formed can be made even in the circumferential direction of the caulking portion 16A, and acting of a local pressure on the members around the caulking portion 16A can be prevented.

Moreover, by bringing the pressure-contact portion 18A closer to the straight line connecting the outer peripheral side wall 161A of the caulking portion 16A and the connection portion 42A of the collector plate 4A with the shortest distance, the welded portion W and the contact surfaces 44A and 162A with small electric resistance can be brought closer to the connection portion 42A of the collector plate 4A. For example, as illustrated in FIG. 5, by forming the pressure-contact portion 18A and the welded portion W in the region surrounded by the broken line on the straight line L1, the contact surfaces 44A and 162A and the welded portion W are formed with the shortest distance to the connection portion 42A of the collector plate 4A. Therefore, by reducing a current path from the caulking portion 16A to the connection portion 42A of the collector plate 4A, electric resistance can be lowered.

Moreover, since the connection terminal 12A has a solid columnar shape and the tip end side of the cylindrical portion 121A has a hollow cylindrical shape, when the cylindrical portion 121A is caulked, the caulking portion 16A can be easily formed having a circular uniform shape on a plan view. Moreover, by forming the caulking portion 16A having a circular shape on a plan view, the pressure-contact portion 18A can be uniformly arranged easily in the circumferential direction of the caulking portion 16A.

As described above, in the secondary battery C1 of the present embodiment, by forming the pressure-contact portion 18A, the contact surfaces 44A and 162A are formed between the collector plate 4A and the caulking portion 16A, and the contact portion CP between the collector plate 4A including the contact surfaces 44A and 162A and the outer peripheral side wall 161A of the caulking portion 16A is welded at least along the pressure-contact portion 18A. Therefore, there is no more need to thin the pressure-contact portion 18A more than necessary, and the pressure to be applied to the caulking portion 16A can be reduced more than before, whereby high caulking strength can be obtained in the caulking portion 16A. Moreover, since the contact surfaces 44A and 162A are generated between the collector plate 4A and the caulking portion 16A, a favorable welding quality can be obtained in the welded portion W.

### (Forming process of caulking portion and pressure-contact portion)

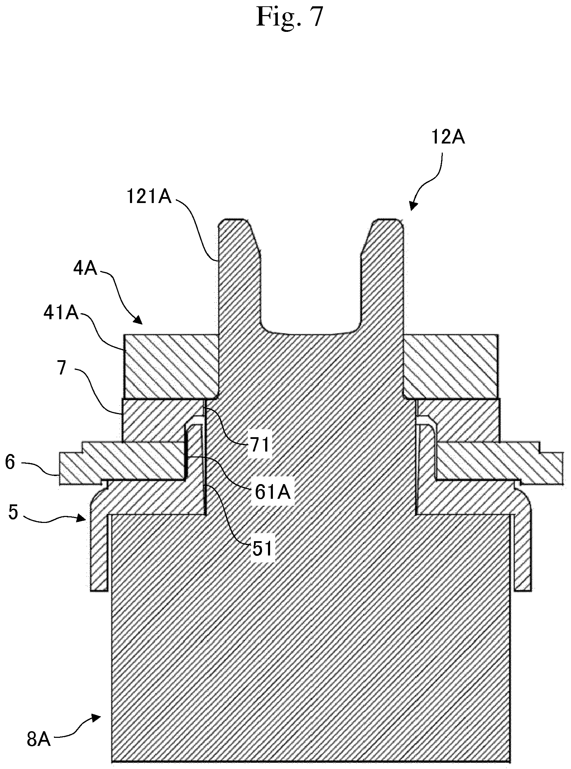

Subsequently, in the secondary battery C1 of the present embodiment, a process for forming the caulking portion 16A and the pressure-contact portion 18A will be described. FIG. 7 is a sectional view before caulking fixation of the external terminal 8A and the collector plate 4A illustrated in FIG. 6. FIG. 7 illustrates a state in which the connection terminal 12A provided on the external terminal 8A illustrated in FIG. 4 is sequentially inserted into the through hole 51 of the gasket 5, the through hole 61A of the battery lid 6, and the through hole 71 of the insulating plate 7, and the cylindrical portion 121A on the tip end is inserted through the through hole 43A provided in the base portion 41A of the collector plate 4A.

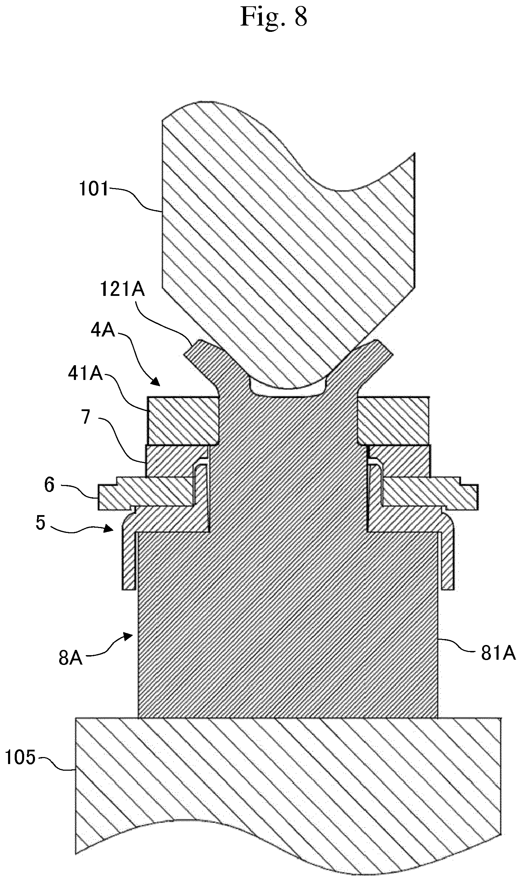

First, as illustrated in FIG. 8, in a state in which an upper surface of a welding joint portion 81A of the external terminal 8A is directed to an upper flat surface of a die 105, the external terminal 8A is placed on the upper flat surface of the die 105 and is supported from below. Then, a tip end formed having a projecting curved surface shape of a tapered die 101 is pressed onto an inner diameter surface of the cylindrical portion 121A of the connection terminal 12A, and the cylindrical portion 121A is pushed open outward from the inside. As a result, the external terminal 8A, the gasket 5, the insulating plate 7, and the collector plate 4A are temporarily fixed to the battery lid 6.

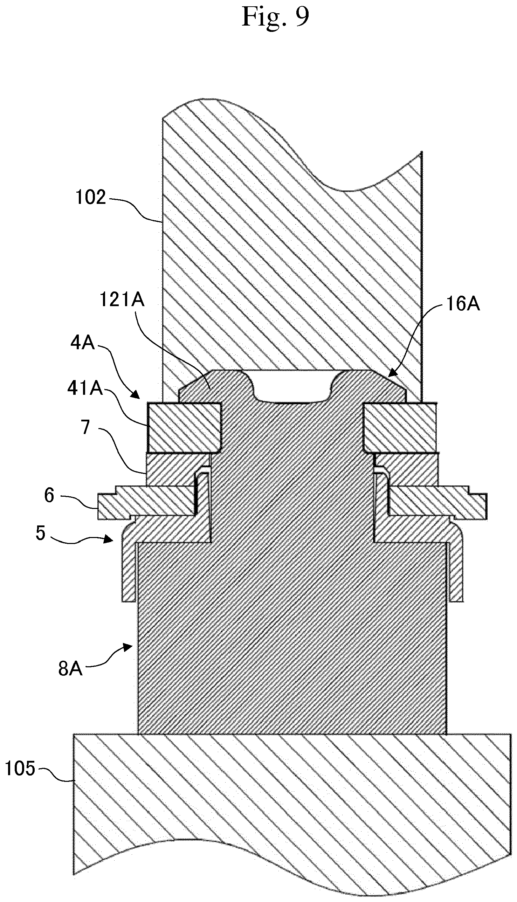

Subsequently, in a state in which the external terminal 8A is supported by the die 105 similarly to the previous process, the cylindrical portion 121A pushed open in the previous process is pressed by a die 102 provided with a recess portion on a tip end as illustrated in FIG. 9. As a result, the cylindrical portion 121A is pushed open into a disc shape, the caulking portion 16A having a circular outer profile on a plan view is formed, and the external terminal 8A, the gasket 5, the battery lid 6, the insulating plate 7, and the collector plate 4A are caulked/fixed and integrated.

At this time, between a surface of the caulking portion 16A faced with the collector plate 4A and a surface of the collector plate 4A faced with the caulking portion 16A, a slight space or a gap is formed in some cases. Therefore, even if the caulking portion 16A and the collector plate 4A are brought into partial contact, there is a concern that they are not in full contact. That is caused by formation of the caulking portion 16A by pushing open the cylindrical portion 121A on the tip end of the connection terminal 12A outward in the radial direction, and the center side of the caulking portion 16A is more difficult to be in contact with the collector plate 4A than the outer peripheral end portion.

Subsequently, as illustrated in FIG. 10, in the state in which the external terminal 8A is supported by the die 105 similarly to the previous process, the caulking portion 16A is pressed by a die 103 provided with a plurality of projecting portions 103A on a tip end. On the tip end of the die 103, two projecting portions 103A in the number corresponding to the number of the pressure-contact portions 18A are formed, and each of the projecting portions 103A is formed having a linear or rectangular shape corresponding to the shape of the pressure-contact portion 18A, longer in one direction in parallel with each other on a plan view. By means of these projecting portions 103A, a part of the caulking portion 16A is pressurized, whereby the pressure-contact portion 18A is provided, and the contact surfaces 162A and 44A are formed between the caulking portion 16A and the collector plate 4A. Moreover, the lower end of the outer peripheral side wall 161A of the caulking portion 16A and the lower surface of the collector plate 4A including the contact surface 44A are brought into contact with each other, and the contact portion CP is formed. Here, a thickness T2 of the pressure-contact portion 18A does not have to be extremely thinner than a thickness T1 of the caulking portion 16A. For example, if the thickness T1 of the caulking portion 16A is 1 mm, the thickness T2 of the pressure-contact portion 18A may be 0.6 to 0.8 mm.

Subsequently, as illustrated in FIGS. 5 and 6, the contact portion CP between the lower surface including the contact surface 44A of the base portion 41A of the collector plate 4A and the outer peripheral side wall 161A of the caulking portion 16A is welded along the pressure-contact portion 18A. As a result, the welded portion W is formed on the contact portion CP. The welded portion W is, as illustrated in FIG. 6, formed by irradiating high energy beams such as laser beams and electron beams, for example, along the straight line L2 inclined to the outer peripheral side wall 161A of the caulking portion 16A from a position diagonally above facing the contact portion CP and by moving the irradiation position along the pressure-contact portion 18A. In the present embodiment, the welded portion W is formed by laser welding using carbon dioxide gas laser, YAG laser and the like, for example. As a result, the welded portion W is formed on the contact portion CP between the outer peripheral side wall 161A of the caulking portion 16A and the contact surface 44A of the collector plate 4A along the pressure-contact portion 18A, and the caulking portion 16A and the collector plate 4A are joined and electrically connected.

As described above, according to the secondary battery Cl of the present embodiment, since the welded portion W is formed by irradiating the contact portion CP between the outer peripheral side wall 161A of the caulking portion 16A and the contact surface 44A of the collector plate 4A with the high energy beams, the pressure-contact portion 18A does not have to be extremely thinned. Thus, when the pressure-contact portion 18A is formed, a load and pressure acting on the members around the caulking portion 16A can be drastically reduced as compared with the prior-art, and deformation of the gasket 5, the battery lid 6, the insulating plate 7, the collector plate 4A and the like, for example, can be prevented. Moreover, the contact surfaces 162A and 44A are formed on the pressure-contact portion 18A, and since a space or a gap is not formed any more between the caulking portion 16A and the collector plate 4A on the pressure-contact portion 18A and its periphery, when the welded portion W is formed along the pressure-contact portion 18A, a defect of the welded portion W can be prevented.

### [Second embodiment]

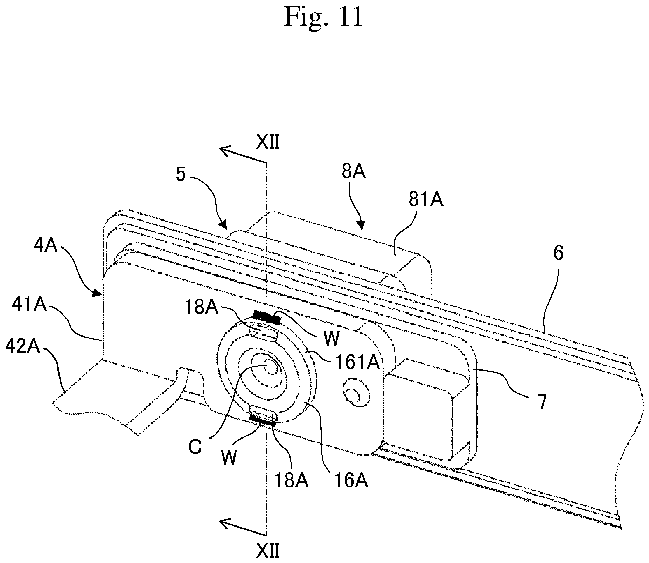

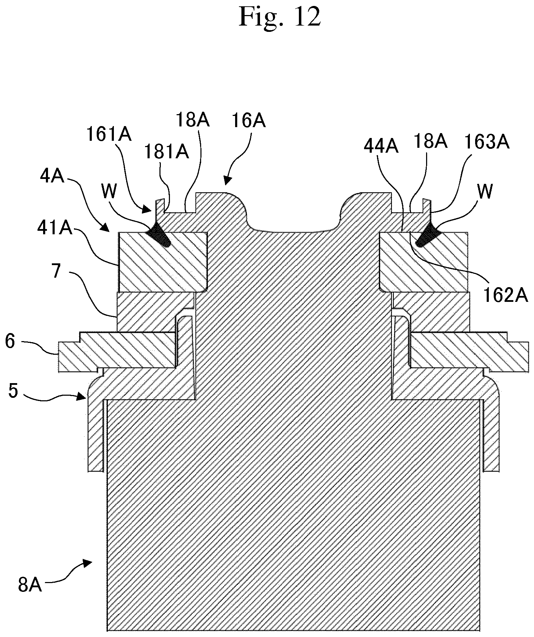

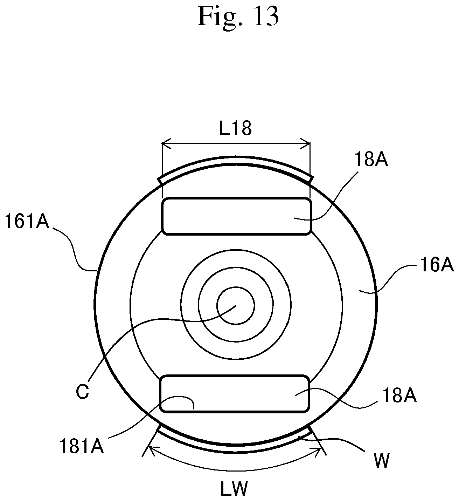

Subsequently, a secondary battery according to a second embodiment of the present invention will be described. FIG. 11 is a perspective view of a vicinity of a positive electrode external terminal 8A and a positive electrode collector plate 4A of a secondary battery C2 of the present embodiment, corresponding to FIG. 5 of the first embodiment. FIG. 12 is a sectional view along a XII-XII line in FIG. 11. FIG. 13 is an enlarged plan view of a caulking portion 16A.

In the present embodiment, too, similarly to the first embodiment, the positive electrode side and the negative electrode side basically have symmetric constitution. Thus, in the following description, the constitution of the positive electrode side will be described, while the description for the constitution of the negative electrode side will be omitted.

The secondary battery C2 of the present embodiment is different from the secondary battery C1 of the first embodiment in a point that an outer edge 181 of a pressure-contact portion 18A is provided on an inner side from an outer peripheral side wall 161A of the caulking portion 16A. Since the other constitution of the secondary battery C2 of the present embodiment is the same as the constitution of the secondary battery C1 of the first embodiment, FIGS. 1 to 4 and FIGS. 7 to 9 of the first embodiment are cited, the same reference numerals are given to the same portions, and description will be omitted.

As illustrated in FIGS. 11 to 13, in the secondary battery C2 of the present embodiment, the pressure-contact portion 18A is a recess groove in which an outer edge 181 is provided on an inner side from the outer peripheral side wall 161A of the caulking portion 16A, that is, on the center C side of the caulking portion 16A. Moreover, the caulking portion 16A is formed having a disc shape and the outer peripheral side wall 161A is formed having an arc shape on a plan view. The pressure-contact portion 18A is formed linearly along the outer peripheral side wall 161A of the caulking portion 16A on a plan view. That is, the pressure-contact portion 18A is a linear recess groove along the outer peripheral side wall 161A having an arc shape on a plan view. The pressure-contact portion 18A may be formed having an arc shape or fan shape along the outer peripheral side wall 161A of the caulking portion 16A.

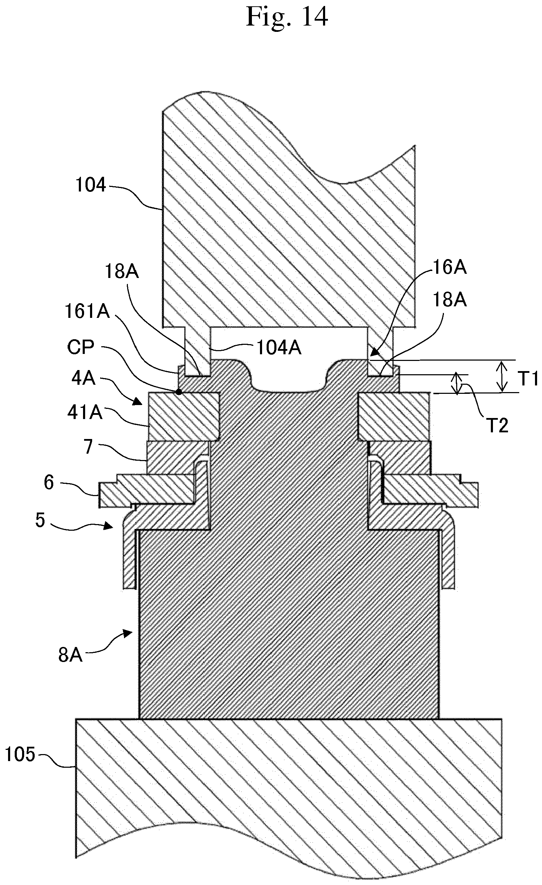

In the present embodiment, the caulking portion 16A is formed through processes similar to those in the first embodiment illustrated in FIGS. 7 to 9. On the other hand, the pressure-contact portion 18A is formed by using a die provided with a projecting portion having a shape and arrangement different from those of the projecting portion 103A of a die 103 of the first embodiment illustrated in FIG. 10. As illustrated in FIG. 14, a die 104 used for forming of the pressure-contact portion 18A of the present embodiment includes a projecting portion 104A for pressing a part of the caulking portion 16A by abutting against the portion on the inner side from the outer peripheral side wall 161A of the caulking portion 16A. Each of the projecting portions 104A is formed having a linear or rectangular shape corresponding to the shape of the pressure-contact portion 18A, longer in one direction in parallel with each other on a plan view. By means of these projecting portions 104A of the die 104, a part of the caulking portion 16A is pressurized, whereby the pressure-contact portion 18A is provided, and as illustrated in FIG. 12, contact surfaces 162A and 44A are generated between the caulking portion 16A and a collector plate 4A.

As described above, the center side of the caulking portion 16A is more difficult to be in contact with the collector plate 4A than the outer peripheral end portion. According to the secondary battery C2 of the present embodiment, by providing the outer edge 181 of the pressure-contact portion 18A on the inner side from the outer peripheral side wall 161A of the caulking portion 16A, on the center side of the caulking portion 16A where contact with the collector plate 4A is more difficult, the contact surfaces 162A and 44A can be generated between the caulking portion 16A and the collector plate 4A. Moreover, by forming the pressure-contact portion 18A, the caulking portion 16A and the collector plate 4A can be brought into contact also in its vicinity. Thus, when the position where the pressure-contact portion 18A is provided is to be determined, adjustment is made so that a space or a gap is not formed between the caulking portion 16A and the collector plate 4A between the outer edge 181 of the pressure-contact portion 18A and the outer peripheral side wall 161A of the caulking portion 16A. As a result, a contact portion CP can be formed between the collector plate 4A and the outer peripheral side wall 161A of the caulking portion 16A. After that, by forming a welded portion W by welding the contact portion CP along the pressure-contact portion 18A, a defect of the welded portion W can be prevented.

Moreover, as illustrated in FIG. 13, the outer peripheral side wall 161A of the caulking portion 16A is formed having an arc shape on a plan view, and the pressure-contact portion 18A is formed linearly along the outer peripheral side wall 161A on a plan view. As a result, when the welded portion W is formed having the same length LW, as compared with the case in which the pressure-contact portion 18A is formed having an arc shape or a fan shape, the length L18 of the pressure-contact portion 18A can be reduced, and the area of the pressure-contact portion 18A can be made smaller. Therefore, as compared with the case in which the pressure-contact portion 18A is formed having the arc shape or the fan shape, the pressure applied to the caulking portion 16A can be reduced when the pressure-contact portion 18A is formed.

As described above, according to the secondary battery C2 of the present embodiment, not only that the effect similar to that of the secondary battery C1 of the first embodiment can be obtained, but also the contact surfaces 162A and 44A can be generated on the center C side of the caulking portion 16A where it is more difficult to be brought into contact with the collector plate 4A.

### [Third embodiment]

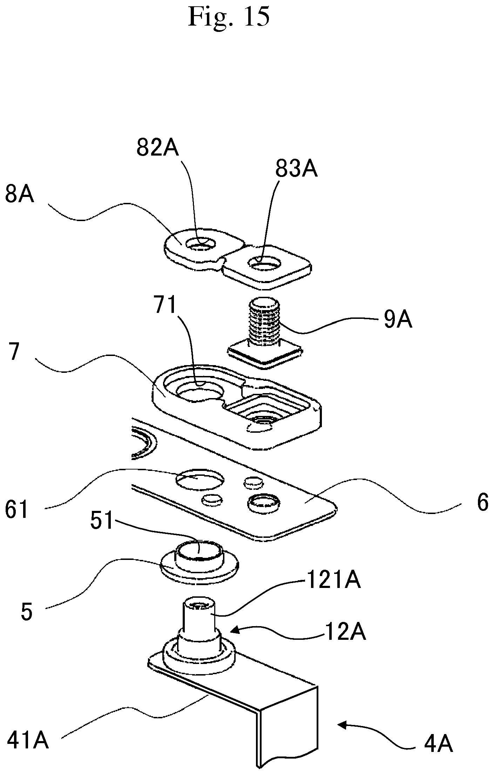

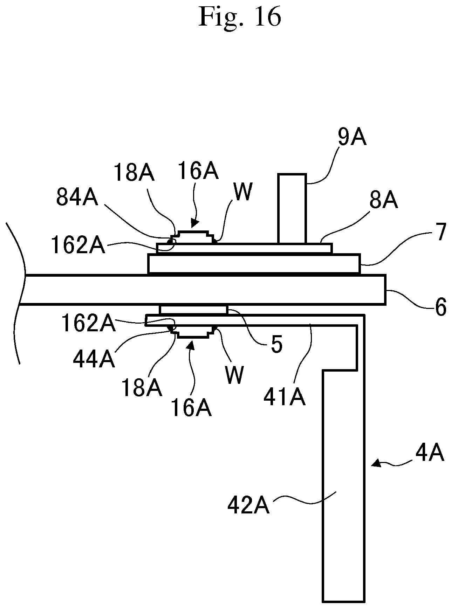

Subsequently, a secondary battery according to a third embodiment of the present invention will be described. FIG. 15 is an exploded perspective view of the vicinities of a positive electrode external terminal 8A and a positive electrode collector plate 4A of the secondary battery of the present embodiment. FIG. 16 is a front enlarged view illustrating a state in which the positive electrode external terminal 8A and the positive electrode collector plate 4A illustrated in FIG. 15 are caulked/fixed to a battery lid 6.

In the present embodiment, too, similarly to the first embodiment, a positive electrode side and a negative electrode side basically have symmetric constitution. Thus, in the following description, the constitution of the positive electrode side will be described, while the description for the constitution of the negative electrode side will be omitted.

The secondary battery of the present embodiment is different from the secondary battery C1 of the first embodiment in the constitution and arrangement of a collector plate 4A, a gasket 5, an insulating plate 7 and an external terminal 8A. Since the other constitution of the secondary battery of the present embodiment is the same as the constitution of the secondary battery C1 of the first embodiment, FIGS. 1 to 10 of the first embodiment are cited, the same reference numerals are given to the same portions, and description will be omitted.

In the secondary battery of the present embodiment, as illustrated in FIG. 15, a connection terminal 12A is integrally provided on a base portion 41A of the collector plate 4A. The external terminal 8A is formed having a plate shape and has two through holes 82 and 83. The gasket 5 is arranged between the collector plate 4A and the battery lid 6 and electrically insulates the collector plate 4A and the battery lid 6. The insulating plate 7 is arranged between the battery lid 6 and the external terminal 8A and electrically insulates the battery lid 6 and the external terminal 8A. Between the insulating plate 7 and the external terminal 8A, a male screw 9 is arranged. On the insulating plate 7, a recess portion for accommodating and arranging the external terminal 8A and a head part of the male screw 9 is formed in a state in which the male screw 9 is inserted through the through hole 83A of one of the external terminals 8A.

The connection terminal 12A is sequentially inserted through a through hole 51 of the gasket 5, a through hole 61A of the battery lid 6, and a through hole 71 of the insulating plate 7, and the cylindrical portion 121A on the tip end is inserted through a through hole 82 of the external terminal 8A and caulked on the upper surface of the external terminal 8A. As a result, as illustrated in FIG. 16, a caulking portion 16A is provided on the upper surface of the external terminal 8A, and the external terminal 8A and the collector plate 4A are caulked/fixed to the battery lid 6 by the connection terminal 12A. The caulking portion 16A provided on the upper surface of the external terminal 8A is located on the outer side of the battery container after assembly of the secondary battery.

In the present embodiment, similarly to the first embodiment illustrated in FIG. 4, a through hole 43A is provided in the base portion 41A of the collector plate 4A, the connection terminal 12A is inserted into the through hole 43A, and the caulking portion 16A is formed also on the lower surface of the base portion 41A of the collector plate 4A. However, the joining method between the connection terminal 12A and the collector plate 4A is not limited to caulking fixation but they may be joined by welding, for example, or the connection terminal 12A and the collector plate 4A may be integrally molded.

The caulking portion 16A on the upper surface of the external terminal 8A includes a pressure-contact portion 18A forming contact surfaces 162A and 84A by pressurization between it and the external terminal 8A. A contact portion between the upper surface of the external terminal 8A and an outer peripheral side wall 161A of the caulking portion 16A is welded along the pressure-contact portion 18A, whereby a welded portion W is formed. Moreover, similarly to the first embodiment, the caulking portion 16A on the lower surface of the collector plate 4A also includes the pressure-contact portion 18A, and the welded portion W is formed along the pressure-contact portion 18A.

In the secondary battery of the present embodiment, the contact surfaces 84A and 162A are formed by the pressure-contact portion 18A between the external terminal 8A and the caulking portion 16A, and the contact portion between the external terminal 8A and the outer peripheral side wall 161A of the caulking portion 16A is welded along the pressure-contact portion 18A. Thus, similarly to the secondary battery C1 of the first embodiment, since there is no more need to thin the pressure-contact portion 18A more than necessary, not only that the pressure to be applied to the caulking portion 16A can be reduced, but high caulking strength can be obtained in the caulking portion 16A. Moreover, by means of the contact surfaces 84A and 162A, a favorable welding quality can be ensured on the welded portion W.

The preferred embodiments of the present invention have been described, but the present invention is not limited to the embodiments described above but includes various variations. The embodiments described above are described in detail in order to explain the present invention so as to be easily understood and are not necessarily limited to those including all the described constitution. For example, the case in which the pressure-contact portion is provided on the positive and negative caulking portions is described in the embodiments described above, but the pressure-contact portion may be provided only on the caulking portion of either of the positive and negative caulking portions.

### Reference Signs List

1 battery can
1A upper opening
3 electrode group
4A positive electrode collector plate (collector plate)
4B negative electrode collector plate (collector plate)
41A base portion
42A connection portion
44A contact surface
6 battery lid
8A positive electrode external terminal (external terminal)
8B negative electrode external terminal (external terminal)
84A contact surface
12A positive electrode connection terminal (connection terminal)
12B negative electrode connection terminal (connection terminal)
16A positive electrode caulking portion (caulking portion)
16B negative electrode caulking portion (caulking portion)
161A outer peripheral side wall
162A contact surface
163A non-melted portion
18A positive electrode pressure-contact portion (pressure-contact portion)
18B negative electrode pressure-contact portion (pressure-contact portion)
CP contact portion
d1 depth of welded portion
W welded portion

## Claims

1. A secondary battery (C1) comprising:
an electrode group (3); a battery can (1) for accommodating the electrode group (3);
a battery lid (6) for sealing an upper opening of the battery can (1); an external terminal (8A, 8B) provided on an outer side of the battery lid (6); a connection terminal (12A, 12B) electrically connected to the external terminal (8A, 8B); and a collector plate (4A, 4B) provided on an inner side of the battery lid (6) and electrically connected to the electrode group (3) and also electrically connected to the connection terminal (12A, 12B),
wherein the collector plate (4A, 4B) and the external terminal (8A, 8B) are caulked and thereby fixed to the battery lid (6) by the connection terminal (12A, 12B), the connection terminal (12A, 12B) includes a caulking portion (16A, 16B), a pressure-contact portion (18A, 18B) provided by pressurizing a part of the caulking portion (16A, 16B) into a stepped state for forming by pressurization a contact surface between the collector plate (4A, 4B) and the external terminal (8A, 8B), a contact portion (CP) between the collector plate (4A, 4B) and the external terminal (8A, 8B), and an outer peripheral side wall (161A) of the caulking portion (16A, 16B) is welded at least along the pressure-contact portion (18A, 18B), wherein in a radial direction starting at the outer peripheral side wall (161A) a depth of the welding (W) increases in a direction from the caulking portion (16A, 16B) toward the battery lid (6), and
in an axial direction starting at the contact surface (162 A) a depth of the welding (W)
increases in a direction from the outer peripheral side wall (161A) toward a center line (CL) of the connection terminal (12A, 12B), **characterized in that** the outer peripheral side wall (161A) has an end portion on the contact portion side melted in the welding and solidified and has a non-melted portion not melted in the welding on a portion in an in the axial direction away from the contact portion (CP).

2. The secondary battery (C1) according to claim 1, wherein the pressure-contact portion (18A, 18B) is a stepped portion provided on an outer peripheral end portion of the caulking portion (16A, 16B) so that an outer edge reaches the outer peripheral side wall (161A).

3. The secondary battery (C1) according to claim 1, wherein the pressure-contact portion (18A, 18B) is a recess groove having an outer edge provided on an inner side of the caulking portion (16A, 16B) from the outer peripheral side wall (161A).

4. The secondary battery according (C1) to claim 2 or 3, wherein
the outer peripheral side wall (161A) is formed having an arc shape on a plan view, and
the pressure-contact portion (18A, 18B) is formed linearly on a plan view.

5. The secondary battery (C1) according to claim 4, wherein
the caulking portion (16A, 16B) is provided on a lower surface of the collector plate (4A, 4B), and
the pressure-contact portion (18A, 18B) generates the contact surface (CP) between the caulking portion (16A, 16B) and the collector plate (4A, 4B).

6. The secondary battery (C1) according to claim 5, wherein
the collector plate (4A, 4B) has a base portion connected to the external terminal (8A, 8B) by the connection terminal (12A, 12B) and a connection portion (42A) provided on the base portion and connected to the electrode group (3), and
the pressure-contact portion (18A, 18B) is formed on a straight line connecting the outer peripheral side wall (161A) and the connection portion (42A) with a shortest distance.

7. The secondary battery (C1) according to claim 4, wherein
the caulking portion (16A, 16B) is provided on an upper surface of the external terminal (8A, 8B), and
the pressure-contact portion (18A, 18B) generates the contact surface (CP) between the caulking portion (16A, 16B) and the external terminal (8A, 8B).

## Patentansprüche

1. Sekundäre Batterie (C1), die umfasst:
eine Elektrodengruppe (3); eine Batteriebüchse (1) zum Aufnehmen der Elektrodengruppe (3); einen Batteriedeckel (6) zum Abdichten einer oberen Öffnung der Batteriebüchse (1); einen externen Anschluss (8A, 8B), der auf einer äußeren Seite des Batteriedeckels (6) vorgesehen ist; einen Verbindungsanschluss (12A, 12B), der mit dem externen Anschluss (8A, 8B) elektrisch verbunden ist; und eine Kollektorplatte (4A, 4B), die auf einer inneren Seite des Batteriedeckels (6) vorgesehen ist und mit der Elektrodengruppe (3) elektrisch verbunden ist und außerdem mit dem Verbindungsanschluss (12A, 12B) elektrisch verbunden ist,
wobei die Kollektorplatte (4A,4B) und der externe Anschluss (8A, 8B) verstemmt sind und dadurch an dem Batteriedeckel (6) durch den Verbindungsanschluss (12A, 12B) befestigt sind, der Verbindungsanschluss (12A, 12B) einen Verstemmungsteil (16A, 16B) enthält, wobei ein Druckkontaktteil (18A, 18B) durch Unterdrucksetzen eines Teils des Verstemmungsteils (16A,16B) in einem gestuften Zustand vorgesehen ist, um durch Unterdrucksetzen einer Kontaktfläche zwischen der Kollektorplatte (4A, 4B) und dem externen Anschluss (8A, 8B) einen Kontaktteil (CP) zwischen der Kollektorplatte (4A, 4B) und dem externen Anschluss (8A, 8B) zu bilden und eine äußere Umfangsseitenwand (161A) des Verstemmungsteils (16A, 16B) zumindest entlang des Druckkontaktteils (18A, 18B) geschweißt ist, wobei beginnend an der äußeren Umfangsseitenwand (161A) in einer radialen Richtung eine Tiefe der Schweißung (W) in einer Richtung von dem Verstemmungsteil (16A, 16B) in Richtung des Batteriedeckels (6) ansteigt und
beginnend an der Kontaktfläche (162A) in einer axialen Richtung eine Tiefe der Schweißung (W) in einer Richtung von der äußeren Umfangsseitenwand (161A) in Richtung einer Mittellinie (CL) des Verbindungsanschlusses (12A, 12B) ansteigt, **dadurch gekennzeichnet, dass** die äußere Umfangsseitenwand (161A) einen Endteil auf der Kontaktteilseite besitzt, der in die Schweißung geschmolzen ist und verfestigt ist und einen nicht in der Schweißung geschmolzenen Teil auf einem Teil in einer axialen Richtung weg von dem Kontaktteil (CP) besitzt.

2. Sekundäre Batterie (C1) nach Anspruch 1, wobei der Druckkontaktteil (18A, 18B) ein gestufter Teil ist, der auf einem äußeren Umfangsendteil des Verstemmungsteils (16A, 16B) vorgesehen ist, so dass eine äußere Kante die äußere Umfangsseitenwand (161A) erreicht.

3. Sekundäre Batterie (C1) nach Anspruch 1, wobei der Druckkontaktteil (18A, 18B) eine Aussparungsnut ist, die eine äußere Kante besitzt, die auf einer inneren Seite des Verstemmungsteils (16A, 16B) von der äußeren Umfangsseitenwand (161A) vorgesehen ist.

4. Sekundäre Batterie nach (C1) Anspruch 2 oder 3, wobei
die äußere Umfangsseitenwand (16 1A) so gebildet ist, dass sie eine Bogenform auf einer Draufsicht besitzt, und
der Druckkontaktteil (18A, 18B) linear auf einer Draufsicht gebildet ist.

5. Sekundäre Batterie (C1) nach Anspruch 4, wobei
der Verstemmungsteil (16A, 16B) auf einer unteren Fläche der Kollektorplatte (4A, 4B) vorgesehen ist und
der Druckkontaktteil (18A, 18B) die Kontaktfläche (CP) zwischen dem Verstemmungsteil (16A, 16B) und der Kollektorplatte (4A, 4B) erzeugt.

6. Sekundäre Batterie (C1) nach Anspruch 5, wobei
die Kollektorplatte (4A, 4B) einen Basisteil besitzt, der mit dem externen Anschluss (8A, 8B) durch den Verbindungsanschluss (12A, 12B) und ein Verbindungsteil (42A), das auf dem Basissteil vorgesehen ist und mit der Elektrodengruppe (3) verbunden ist, verbunden ist und
der Druckkontaktteil (18A, 18B) auf einer geraden Linie gebildet ist, die die äußere Umfangsseitenwand (161A) und den Verbindungsteil (42A) mit einem kürzesten Abstand verbindet.

7. Sekundäre Batterie (C1) nach Anspruch 4, wobei
der Verstemmungsteil (16A, 16B) auf einer oberen Fläche des externen Anschlusses (8A, 8B) vorgesehen ist und
der Druckkontaktteil (18A; 8B) die Kontaktfläche (CP) zwischen dem Verstemmungsteil (16A, 16B) und dem externen Anschluss (8A, 8B) erzeugt.

## Revendications

1. Batterie secondaire (C1) comprenant :
un groupe d'électrodes (3) ; une boîte de batterie (1) pour loger le groupe d'électrodes (3) ; un couvercle de batterie (6) pour étancher une ouverture supérieure de la boîte de batterie (1) ; une borne extérieure (8A, 8B) prévue sur un côté extérieur du couvercle de batterie (6) ; une borne de connexion (12A, 12B) connectée électriquement à la borne extérieure (8A, 8B) ; et une plaque collectrice (4A, 4B) prévue sur un côté intérieur du couvercle de batterie (6) et électriquement connectée au groupe d'électrodes (3) et également électriquement connectée à la borne de connexion (12A, 12B),
dans laquelle la plaque collectrice (4A, 4B) et la borne extérieure (8A, 8B) sont calfeutrées et ainsi fixées au couvercle de batterie (6) par la borne de connexion (12A, 12B), la borne de connexion (12A, 12B) inclut une portion de calfeutrage (16A, 16B), une portion de contact sous pression (18A, 18B) prévue en pressant une partie de la portion de calfeutrage (16A, 16B) jusque dans un état en gradins pour former, par pressurisation, une surface de contact entre la plaque collectrice (4A, 4B) et la borne extérieure (8A, 8B), une portion de contact (CP) entre la plaque collectrice (4A, 4B) et la borne extérieure (8A, 8B), et une paroi latérale périphérique extérieure (161A) de la portion de calfeutrage (16A, 16B) est soudée au moins le long de la portion de contact sous pression (18A, 18B),
dans laquelle, dans une direction radiale en commençant au niveau de la paroi latérale périphérique extérieure (161A), une profondeur de la soudure (W) augmente dans une direction depuis la portion de calfeutrage (16A, 16B) vers le couvercle de batterie (6), et
dans une direction axiale en commençant au niveau de la surface de contact (162A), une profondeur de la soudure (W) augmente dans une direction depuis la paroi latérale périphérique extérieure (161) vers une ligne centrale (CL) de la borne de connexion (12A, 12B),
**caractérisé en ce que** la paroi latérale périphérique extérieure (161A) possède une portion terminale sur le côté de la portion de contact intégrée par fusion dans la soudure et solidifiée, et comprend une portion qui n'est pas intégrée par fusion dans la soudure sur une portion dans la direction axiale en éloignement de la portion de contact (CP).

2. Batterie secondaire (C1) selon la revendication 1, dans laquelle la portion de contact sous pression (18A, 18B) est une portion en gradins prévue sur une portion d'extrémité périphérique extérieure de la portion de calfeutrage (16A, 16B), de sorte qu'une bordure extérieure atteint la paroi latérale périphérique extérieure (161A).

3. Batterie secondaire (C1) selon la revendication 1, dans laquelle la portion de contact sous pression (18A, 18B) est une gorge évidée ayant une bordure extérieure prévue sur un côté intérieur de la portion de calfeutrage (16A, 16B) depuis la paroi latérale périphérique extérieure (161A).

4. Batterie secondaire (C1) selon la revendication 2 ou 3, dans laquelle
la paroi latérale périphérique extérieure (161A) est formée avec une forme en arc sur une vue en plan, et
la portion de contact sous pression (18A, 18B) est formée de manière linéaire sur une vue en plan.

5. Batterie secondaire (C1) selon la revendication 4, dans laquelle
la portion de calfeutrage (16A, 16B) est prévue sur une surface inférieure de la plaque collectrice (4A, 4B), et
la portion de contact sous pression (18A, 18B) génère la surface de contact (CP) entre la portion de calfeutrage (16A, 16B) et la plaque collectrice (4A, 4B).

6. Batterie secondaire (C1) selon la revendication 5, dans laquelle
la plaque collectrice (4A, 4B) a une portion de base connectée à la borne extérieure (8A, 8B) par la borne de connexion (12A, 12B) et une portion de connexion (42A) prévue sur la portion de base et connectée au groupe d'électrodes (3), et
la portion de contact sous pression (18A, 18B) est formée sur une ligne droite qui connecte la paroi latérale périphérique extérieure (161A) et la portion de connexion (42A) avec une distance la plus courte.

7. Batterie secondaire (C1) selon la revendication 4, dans laquelle
la portion de calfeutrage (16A, 16B) est prévue sur une surface supérieure de la borne extérieure (8A, 8B), et
la portion de contact sous pression (18A, 18B) génère la surface de contact (CP) entre la portion de calfeutrage (16A, 16B) et la borne extérieure (8A, 8B).
